(19) Europäisches Patentamt
European Patent Office
Office européen des brevets

(11) Veröffentlichungsnummer: **0 282 846**
**A2**

(12) **EUROPÄISCHE PATENTANMELDUNG**

(21) Anmeldenummer: **88103421.9**

(22) Anmeldetag: **05.03.88**

(51) Int. Cl.⁴: **C07F 7/18** , C07F 7/20

(30) Priorität: **14.03.87 DE 3708293**

(43) Veröffentlichungstag der Anmeldung:
**21.09.88 Patentblatt 88/38**

(84) Benannte Vertragsstaaten:
**BE DE ES FR GB IT NL SE**

(71) Anmelder: **BASF Aktiengesellschaft**
**Carl-Bosch-Strasse 38**
**D-6700 Ludwigshafen(DE)**

(72) Erfinder: **Gousetis, Charalampos, Dr.**
**Carl-Bosch-Strasse 98**
**D-6700 Ludwigshafen(DE)**
Erfinder: **Oppenlaender, Knut, Dr.**
**Otto-Dill-Strasse 23**
**D-6700 Ludwigshafen(DE)**
Erfinder: **Liebold, Gerd, Dr.**
**Hundert Morgen 37**
**D-6803 Edingen-Neckarhausen(DE)**
Erfinder: **Frey, Guenter, Dr.**
**Mainstrasse 13**
**D-6701 Dannstadt-Schauernheim(DE)**

(54) **Verfahren zur Herstellung von Alkoxysilanen mit niedrigem Gehalt an Chlorverbindungen.**

(57) Herstellung von Alkoxysilanen mit niedrigem Gehalt an Chlorverbindungen durch stufenweise Veretherung von Chlorsilanen mit Alkoholen in flüssiger Phase unter Abziehen des entstehenden Chlorwasserstoffs, wobei man die erhaltenen, noch geringe Mengen Chlorverbindungen enthaltenden Alkoxysilane mit Metallalkoholaten in solchen Mengen umsetzt, die einem geringen stöchiometrischen Überschuß, bezogen auf den Anteil der Chlorverbindungen entsprechen und das Reaktionsprodukt von den entstandenen Salzen befreit.

EP 0 282 846 A2

Xerox Copy Centre

## Verfahren zur Herstellung von Alkoxysilanen mit niedrigem Gehalt an Chlorverbindungen

Die Erfindung betrifft ein Verfahren zur Herstellung von Alkoxysilanen mit niedrigem Gehalt an Chlorverbindungen, wobei man die Umsetzungsprodukte von Chlorsilanen mit Alkoholen mit geringen Mengen Metallalkoholaten behandelt.

Die Herstellung von Alkoxysilanen, insbesondere solchen, die als Zusatz zu Bremsflüssigkeiten geeignet sind, wird eingehend in den deutschen Patentschriften 24 09 731, 24 45 552 und 31 38 835 beschrieben. Dabei geht man in jedem Fall von einem Chlorsilan aus, das entweder direkt mit dem gewünschten Alkohol umgesetzt wird, oder von dem man zunächst einen niedermolekularen Ether herstellt, den man mit höheren Alkoholen umethert. Bei dieser Umsetzung bildet sich Chlorwasserstoff, der mit überschüssigem Alkohol unter Bildung von Alkylchloriden und Wasser weiterreagieren kann. Das entstehende Wasser kann seinerseits Polykondensationsreaktionen initiieren, die zu beträchtlichen Ausbeutereduzierungen führen können (vgl. Kirk-Othmers Encyclopedia of Chemical Technology, 3. Edition, Vol. 20, S. 916).

Zur Vermeidung der Nebenreaktionen, die durch das entstandene HCl verursacht werden, sind schon Verfahren vorgeschlagen worden, die es gestatten, den größten Teil des HCl während der Reaktion zu entfernen. Dazu wird z.B. in der deutschen Patentschrift 24 09 731 vorgeschlagen, die Reaktion stufenweise und unter Einleitung des Alkohols unterhalb der Oberfläche der flüssigen Phase vorzunehmen. Eine ähnliche stufenweise Methodik ist in DE-C2-28 00 017 vorgeschlagen worden.

Trotz dieser Maßnahmen läßt sich nicht vermeiden, daß die Umsetzungsprodukte noch unerwünschte organische Chlorverbindungen enthalten. Dies gilt auch für die Verfahrensprodukte der DE-C2-31 38 835, da das Ausgangsmaterial der niedermolekularen Alkoxysilane von deren Herstellung her durch die organischen Chlorverbindungen verunreinigt ist. Deshalb wurde auch schon empfohlen, Produkte mit niedrigem Chlorgehalt dadurch zu erhalten, daß man die Umsetzung in Gegenwart von stöchiometrischen Mengen an tert. Basen, wie Pyridin, N,N-Dimethylanilin oder Triethylamin durchführt (vgl. C. Eaborn, Organosilicon Compounds, 1960 N.Y., Academic Press, S. 288). Zwar gelingt es durch diese Aminzusätze den Gehalt an Chlorverbindungen erheblich zu reduzieren, doch entstehen durch die Mitverwendung von stöchiometrischen Mengen an Aminen erhebliche Kosten. Auch die vorgenannte Methodik der Entfernung von HCl durch entsprechende Verfahrensführung führt zu Produkten, die zur Verminderung des Chlorgehaltes destillativ gereinigt werden müssen.

Es war daher das Ziel der Erfindung ein Verfahren vorzuschlagen, das es erlaubt, Alkoxysilane mit sehr niedrigem Gehalt an Chlorverbindungen herzustellen, ohne zusätzliche kostspielige Maßnahmen und ohne den Einsatz von erheblichen Mengen an Hilfsprodukten.

Diese Aufgabe wurde erfindungsgemäß gelöst mit einem Verfahren zur Herstellung von Alkoxysilanen mit niedrigem Gehalt an Chlorverbindungen durch stufenweise Veretherung von Chlorsilanen mit Alkoholen in flüssiger Phase unter Abziehen des entstehenden Chlorwasserstoffs, wobei man die erhaltenen noch geringen Mengen Chlorverbindungen enthaltenden Alkoxysilane mit Metallalkoholaten in solchen Mengen umsetzt, die einem geringen stöchiometrischen Überschuß, bezogen auf die Anteile der Chlorverbindungen entsprechen und das Reaktionsprodukt von den entstandenen Salzen befreit.

Als erfindungsgemäß herzustellende Alkoxysilane kommen z.B. solche der Formel I

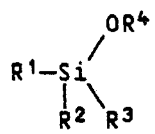

I

in Betracht, in der $R^1$, $R^2$ und $R^3$ aliphatische, araliphatische oder aromatische Reste mit 1 bis 20 Kohlenstoffatomen, $R^1$, $R^2$ und $R^3$ ferner auch den Rest $OR^4$ bedeuten können, $R^1$ ferner ein Wasserstoffatom und $OR^4$ den Rest eines einwertigen Alkohols mit 1 bis 20 Kohlenstoffatomen bedeutet, wozu man Chlorsilane der Formel II

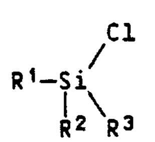

II

mit Alkanolen der Formel III

HO-$R^4$ III

in denen $R^1$, $R^2$, $R^3$ und $R^4$ die obengenannten Bedeutungen haben, $R^1$, $R^2$ und $R^3$ ferner ein Chloratom bedeuten können sowie $R^1$ zusätzlich ein Wasserstoffatom sein kann, umsetzt und das Reaktionsprodukt mit Metallalkoholaten behandelt.

Die bevorzugten Alkoxysilane gemäß dieser Erfindung sind solche, bei denen der Alkohol $HOR^4$ ein Polyglykolmonoether der Formel IV

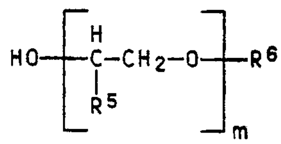

IV

ist, in der $R^5$ Wasserstoff oder Methyl und $R^6$ einen Alkylrest mit 1 bis 8 Kohlenstoffatomen und m die Zahlen 1 bis 4 bedeutet.

Insbesondere betrifft die Erfindung einen sehr geringen Gehalt an Chlorverbindungen aufweisende Alkoxysilane der Formel V

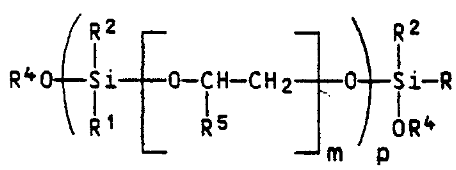

V

in der $R^1$ und $R^2$ Alkylreste mit 1 bis 20 Kohlenstoffatomen, $R^2$ auch den Rest $OR^4$ und $OR^4$ den Rest der Formel VI

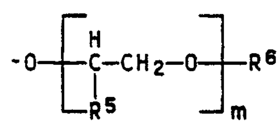

VI

bedeuten, wobei $R^5$ Wasserstoff oder Methyl und $R^6$ ein Alkylrest mit 1 bis 8 Kohlenstoffatomen und m die Zahlen 1 bis 4 und p die Zahlen 1 bis 10 bedeuten.

Als Metallalkoholate für die erfindungsgemäße Umsetzung kommen in der Regel Alkali-und Erdalkalialkoholate in Betracht. Insbesondere eignen sich Kalium-und vorzugsweise Natriumalkoholate. Man verwendet dabei zweckmäßigerweise Alkoholate von den Alkoholen, die den bereits an den Ethersauerstoff gebundenen Resten entsprechen. Die Alkoholate werden in an sich bekannter Weise erhalten, z.B. wie sie in Ullmann's Enzyklopädie der Technischen Chemie, 4. Auflage, Bd. 7, S. 220 im einzelnen beschrieben ist und auf die hiermit Bezug genommen wird.

Für die erfindungsgemäße Umsetzung verwendet man die Alkoholate in solchen Mengen, daß ein geringer Überschuß über die stöchiometrisch erforderliche Menge vorliegt, beispielsweise ein 10 bis 30%iger Überschuß.

Die Umsetzung zur Verminderung der Chlorverbindungen führt man im einzelnen zweckmäßig so aus, daß man die Veretherungsprodukte mit oder ohne Lösungsmittel, wie Toluol oder Xylol, bei einer Temperatur von 80 bis 200°C, vorzugsweise 100 bis 150°C, mit dem Metallalkoholat, insbesondere Natriumalkoholat, 5 bis 30 Stunden umsetzt. Das Reaktionsprodukt wird dann von der relativ kleinen Metallchloridmenge die ausgefallen ist, abfiltriert und gegebenenfalls nach Entfernung des Lösungsmittels ohne weitere Reinigung verwendet. Die Zugabe eines Lösungsmittels ist dann von Vorteil, wenn das Chloridsalz im Produkt besser löslich ist als im Lösungsmittel.

Der Chlorgehalt von Alkoxysilanen, die nach der direkten Veretherungsreaktion noch Chlorverbindungen enthalten, liegt üblicherweise im Bereich von 0,1 bis 1 Gew.%. Durch das erfindungsgemäße Verfahren läßt sich dieser Chlorgehalt auf 0,001 bis 0,02 Gew.% reduzieren. Dieses Ergebnis ist deswegen überraschend, weil die Zugabe von tert. Aminen wie Pyridin, N,N-Dimethylanilin oder Triethylamin unter sonst vergleichbaren Reaktionsbedingungen und in Gegenwart des entsprechenden Alkohols (III, IV) nur die Überführung eines kleinen Teiles von ca. 5 % des noch vorhandenen Chlors in Aminhydrochloride erlaubt.

Die Alkoxysilane, die der erfindungsgemäßen Nachbehandlung unterworfen werden können, sind nach an sich bekannten Methoden erhältlich (vgl. Emblem und Hargreaves, Journal of Inorganic Nuclear Chemistry 30, 721 (1968)), ausgehend von Chlorsilanen wie Methyltrichlorsilan, Methyldichlorsilan, Dimethylchlorsilan, Trimethylchlorsilan, Ethyltrichlorsilan, Ethyldichlorsilan, Propyltrichlorsilan, Butyltrichlorsilan, Amyltrichlorsilan, Octyltrichlorsilan, 2-Ethyltrichlorsilan, Dodecyltrichlorsilan, Vinyltrichlorsilan, Vinyldimethylchlorsilan, Allyltrichlorsilan, 3-Allyloxypropyltrichlorsilan, Benzyltrichlorsilan, Benzylmethyldichlorsilan, 2-Phenylethyltrichlorsilan, Phenylmethyldichlorsilan oder Diphenyldichlorsilan oder Tetrachlorsilan. Als alkoholische Komponenten seien einwertige primäre aliphatische Alkohole mit 1 bis 20 Kohlenstoffatomen genannt, oder Monoether von Polyalkylenglykolen wie Methyl-, Ethyl-, Propyl-oder Butylglykol, oder Di-, Tri-, Tetraethylenglykolmonomethyl-, Ethyl-, Propyl-oder Butylether. Ferner kommen als Alkoholkomponente zweiwertige aliphatische Alkohole wie Ethylenglykol, 1,2-Propylenglykol, 1,2-Butylenglykol und andere Diole mit 3 bis 12 Kohlenstoffatomen mit geradkettiger oder verzweigter Kette in Betracht. Schließlich sind Polyalkylenglykole aus 2 bis 4 Molekülen Ethylen-oder Propylenoxid, sowie mehrwertige Alkohole wie Trimethylolpropan und Pentaerythrit zu nennen. Dabei können die Produkte gleiche oder verschiedene Alkoxyreste enthalten.

Die Verwendung von Polyolen ermöglicht die Synthese von Produkten mit mehreren Si-Atomen im Molekül. So kann man beispielsweise Verbindungen der oben angegebenen Formel V gewinnen. Bei Polychlorsilanen werden alle Chloratome nacheinander bei ständig steigender Temperatur substituiert. Deshalb wird die Umsetzung mit dem Metallalkoholat erst dann vorgenommen, wenn der Chlorgehalt der Reaktionsmischung trotz erhöhter Temperatur und weiterem Rühren nicht mehr merkbar abnimmt; dies ist meist nach etwa 20 Stunden und einer Reaktionstemperatur von 200°C der Fall.

Beispiel

Das erfindungsgemäße Verfahren soll bei der Herstellung des Alkoxysilans VIII erläutert werden.

$$CH_3O(CH_2CH_2O)_3-\underset{CH_3}{\overset{CH_3}{\underset{|}{\overset{|}{Si}}}}-(OCH_2CH_2)_3-\underset{CH_3}{\overset{CH_3}{\underset{|}{\overset{|}{Si}}}}-(OCH_2CH_2)_3OCH_3 \qquad (VIII)$$

Dieses Produkt sowie dessen Kondensationsprodukte gemäß DE 31 38 835 eignen sich als Hydraulikflüssigkeiten (vgl. GB 1 480 738).

500 g (3,88 Mol) Dimethyldichlorsilan werden bei 50 bis 60°C vorgelegt und 291 g (1,94 Mol) Triethylenglykol innerhalb von 70 Min. zudosiert und zwar mit einem Eintauchrohr unterhalb des Flüssigkeitsspiegels. Das dabei entstehende HCl wird durch einen trockenen $N_2$-Strom aus dem Reaktionsgemisch ausgetrieben. Man läßt die Mischung 60 Min. bei 80°C weiterrühren und beginnt dann mit der Zugabe in der oben beschriebenen Weise von 699 g (4,26 Mol) Methyltriglykol. Nach 150 Min. ist die Zugabe beendet. Nun läßt man die Temperatur auf 180°C ansteigen und rührt 20 h bei dieser Temperatur weiter. Das Produkt (1150 g) enthält noch 0,44 Gew.% Cl.

1100 g von diesem Produkt werden nun in 1130 g Toluol bei 110 bis 120°C vorgelegt und mit 30,4 g (0,164 Mol) $CH_3OCH_2CH_2OCH_2CH_2OCH_2CH_2ONa$ (20 Mol% Überschuß bezogen auf 1 Mol Cl im Produkt) tropfenweise versetzt. Man rührt dann weitere 8 h unter Rückfluß, kühlt auf Raumtemperatur ab und filtriert vom Niederschlag ab. Anschließend werden flüchtige Anteile bis 120°C/0,3 mbar entfernt.

Ausbeute: 995 g (VIII) einschließlich geringer Mengen der Kondensationsprodukte der Formel (V), wobei $R^1 = R^2 = CH_3$, $R^4 = CH_3OCH_2CH_2OCH_2CH_2OCH_2CH_2$-, $R^5 = H$, $m = 3$, $1<p<10$

Das Endprodukt enthält 0,016 % Cl. Im Vergleich dazu enthält (VIII), hergestellt nach den Angaben von GB 1 480 738 (Bsp. 1) unter Verwendung stöchiometrischer Mengen von Pyridin 0,03 % Cl.

Das Produkt hatte folgende Eigenschaften:

C 48,5 % H 8,4 % Si 7,6 %
Viskosität bei -40°C: 890 $mm^2\ sec^{-1}$
+100°C: 2,7 $mm^2\ sec^{-1}$
Siedepunkt: 293°C

Naßsiedepunkt (nach SAE J 1703 und FMV SS 116): 234°C

## Ansprüche

1. Verfahren zur Herstellung von Alkoxysilanen mit niedrigem Gehalt an Chlorverbindungen durch stufenweise Veretherung von Chlorsilanen mit Alkoholen in flüssiger Phase unter Abziehen des entstehenden Chlorwasserstoffs, dadurch gekennzeichnet, daß man die erhaltenen, noch geringe Mengen Chlorverbindungen enthaltenden Alkoxysilane mit Metallalkoholaten in solchen Mengen umsetzt, die einem geringen stöchiometrischen Überschuß, bezogen auf den Anteil der Chlorverbindungen entsprechen und das Reaktionsprodukt von den entstandenen Salzen befreit.

2. Verfahren nach Anspruch 1, dadurch gekennzeichnet, daß man Alkoxysilane der Formel I

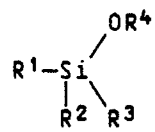

I

herstellt, in der $R^1$, $R^2$ und $R^3$ aliphatische, araliphatische oder aromatische Reste mit 1 bis 20 Kohlenstoffatomen, $R^1$, $R^2$ und $R^3$ ferner auch den Rest $OR^4$ bedeuten können, $R^1$ ferner ein Wasserstoffatom und $OR^4$ den Rest eines einwertigen Alkohols mit 1 bis 20 Kohlenstoffatomen bedeutet, durch Umsetzung von Chlorsilanen der Formel II

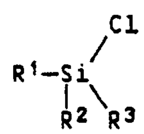

II

mit Alkanolen der Formel III

$HO-R^4$ III

in denen $R^1$, $R^2$, $R^3$ und $R^4$ die oben genannten Bedeutungen haben und $R^1$, $R^2$ und $R^3$ ferner ein Chloratom bedeuten können sowie $R^1$ zusätzlich ein Wasserstoffatom und das Reaktionsprodukt mit Metallalkoholaten behandelt.

3. Verfahren gemäß Anspruch 2, dadurch gekennzeichnet, daß der Alkohol $HO-R^4$ ein Polyglykolmonoether der Formel IV

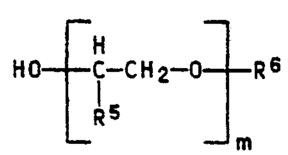

IV

ist, in der $R^5$ Wasserstoff oder Methyl und $R^6$ einen Alkylrest mit 1 bis 8 Kohlenstoffatomen und m die Zahlen 1 bis 4 bedeutet.

4. Verfahren gemäß Anspruch 1, dadurch gekennzeichnet, daß man Alkoxysilane der Formel V

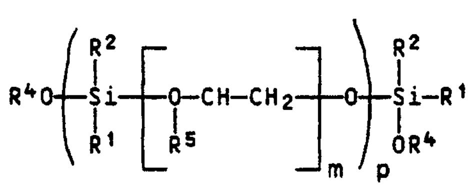

V

in der $R^1$ und $R^2$ Alkylreste mit 1 bis 20 Kohlenstoffatomen, $R^2$ auch den Rest $R^4$ und $OR^4$ den Rest der Formel VI

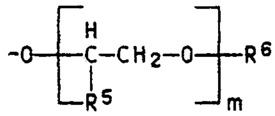

VI

bedeutet, wobei $R^5$ Wasserstoff oder Methyl und $R^6$ einen Alkylrest mit 1 bis 8 Kohlenstoffatomen, m die Zahlen 1 bis 4 und p die Zahlen 1 bis 10 bedeuten.

5. Verfahren gemäß Anspruch 1, dadurch gekennzeichnet, daß man als Metallalkoholat Natriumalkoholat der Formel VII verwendet

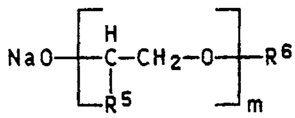

VII,

in der $R^5$, $R^6$ und m die in Anspruch 4 angegebenen Bedeutungen haben.